(19) **Europäisches Patentamt / European Patent Office / Office européen des brevets**

(11) **EP 4 759 515 A1**

(12) **EUROPEAN PATENT APPLICATION**
published in accordance with Art. 153(4) EPC

(43) Date of publication:
**17.06.2026 Bulletin 2026/25**

(21) Application number: **23947887.8**

(22) Date of filing: **07.08.2023**

(51) International Patent Classification (IPC):
**B29C 64/386** (2017.01)   **B33Y 50/00** (2015.01)
**B29C 64/393** (2017.01)   **B33Y 50/02** (2015.01)

(52) Cooperative Patent Classification (CPC):
**B29C 64/386; B33Y 50/00;** B29C 64/393;
B33Y 50/02

(86) International application number:
**PCT/CN2023/111373**

(87) International publication number:
**WO 2025/030305 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Suzhou Helio Additive Information Technology Co., Ltd.**
**Suzhou, Jiangsu 215512 (CN)**

(72) Inventors:
• **QIAN, Longgen**
  **Suzhou, Jiangsu 215512 (CN)**
• **HARTMANN, David Simon**
  **Suzhou, Jiangsu 215512 (CN)**
• **PATEL, Priyesh Ashvin**
  **Suzhou, Jiangsu 215512 (CN)**
• **LUO, Xiaofan**
  **Suzhou, Jiangsu 215512 (CN)**

(74) Representative: **Santarelli**
**Tour Trinity**
**1 bis Place de la Défense**
**92400 Courbevoie (FR)**

(54) **TEMPERATURE PREDICTION METHOD AND SYSTEM FOR 3D PRINTING**

(57)    This specification provides a 3D printing temperature prediction method and system. For a printed element, the corresponding element state thereof is determined based on its positional relationship with a current printing element. Based on a temperature prediction method corresponding to the element state, the temperature prediction data of each printed element in a current printing time window is determined and output. This solution employs different temperature prediction methods for different element states of printed elements, thereby improving the computational efficiency of temperature prediction while ensuring the accuracy of temperature prediction.

FIG. 4A

**(Cont. next page)**

S142

S142-2

Determine a spacing distance between the current printed element(s) and the current printing element — S142-222

S142-22

Is the spacing distance smaller than a first preset distance threshold

N

Y

S142-224

Within the heat-affected zone

S142-24

S142-242

2nd state

2nd temperature prediction method

S142-

S142-226

Beyond the heat-affected zone

Is the cooling rate smaller than a preset cooling rate threshold

Y

S142-244

1st state

1st temperature prediction method

N

S142-246

element state of the previous printing time window

Temperature prediction method corresponding to the element state

FIG. 4B

## Description

### Technical Field

This specification relates to the technical field of data processing, and particularly relates to a 3D printing temperature prediction method and system.

### Background of the Invention

3D printing (3DP), also known as additive manufacturing (AM), uses energy sources such as lasers, resistance heat, and electric arcs as heat sources to melt materials, adopting a bottom-up strategy to stack parts layer by layer, thereby rapidly manufacturing parts. During the 3D printing process, data on the change of material temperature over time (also referred to as thermal history) is a key factor determining the mechanical properties of printed parts and is also the core of the 3D printing process. Accurately predicting the material temperature change data during printing is of great significance for 3D printing process analysis, metallurgical analysis, stress deformation analysis, process control, and the setting of printing parameters. At present, temperature prediction for 3D printing is mainly implemented based on the birth-death element technology. The principle of the birth-death element technology is: the initial state of the material is set to "dead," so it does not participate in the calculation of temperature prediction. When the material is heated by the heat source or extruded, the state of the material becomes "alive" and participates in the temperature prediction calculation. However, as the printing process progresses, more and more material becomes "alive," increasing the number of elements participating in the temperature prediction calculation, which leads to continuously decreasing computational efficiency of temperature prediction.

Therefore, a new 3D printing temperature prediction method is needed to improve the computational efficiency of material temperature prediction and ensure the accuracy of temperature prediction.

The content of the background technology section is merely information personally known to the inventors, and does not indicate that the above information had entered the public domain before the filing date of the present disclosure, nor does it indicate that it can constitute the prior art of the present disclosure.

### Summary of the Invention

This specification provides a 3D printing temperature prediction method and system, capable of improving the computational efficiency of material temperature prediction and ensuring the accuracy of temperature prediction.

In a first aspect, this specification provides a 3D printing temperature prediction method, including for each printing time window of at least one printing time window: determining printing states of a plurality of printing elements of a three-dimensional model, the printing states including a printed element, a current printing element, and an unprinted element; and determining temperature prediction data corresponding to a current printing time window for each printing element among the plurality of printing elements, including: for each printed element among the printed elements, determining an element state at least based on a positional relationship between the printed element and the current printing element, determining the temperature prediction data corresponding to the current printing time window for each printed element based on a temperature prediction method corresponding to the element state, and outputting the temperature prediction data corresponding to the current printing time window for each printing element.

In some embodiments, the element state includes a first state and a second state, the temperature prediction method includes a first temperature prediction method corresponding to the first state and a second temperature prediction method corresponding to the second state, and a computational cost of the first temperature prediction method is lower than a computational cost of the second temperature prediction method.

In some embodiments, the determining of the element state at least based on the positional relationship between the printed element and the current printing element includes: determining a positional relationship between a current printed element and a heat-affected zone of the current printing element, the heat-affected zone characterizing a region range affected by heat transfer, the positional relationship between the current printed element and the heat-affected zone of the current printing element including that the current printed element is within the heat-affected zone of the current printing element and that the current printed element is outside the heat-affected zone of the current printing element; and determining, at least based on the positional relationship, an element state corresponding to the current printed element.

In some embodiments, the determining, at least based on the positional relationship, the element state corresponding to the current printed element includes: determining the element state corresponding to the current printed element based on the positional relationship between the current printed element and the heat-affected zone of the current printing element; or determining the element state corresponding to the current printed element based on the positional relationship between the current printed element and the heat-affected zone of the current printing element and a temperature parameter of the current printed element.

In some embodiments, the determining of the positional relationship between the current printed element and the heat-affected zone of the current printing element includes: determining position coordinates of the current printed element and position coordinates of the current printing element; determining, based on the position coordinates of the current printed element and the position coordinates of the current printing element, a spacing distance between the current printed element and the current printing element; and when the spacing distance is smaller than a first preset distance threshold, determining that the current printed element is located within the heat-affected zone of the current printing element, or when the spacing distance is greater than the first preset distance threshold, determining that the current printed element is located outside the heat-affected zone of the current printing element.

In some embodiments, the determining of the element state corresponding to the current printed element based on the positional relationship between the current printed element and the heat-affected zone of the current printing element includes: determining that the current printed element is located within the heat-affected zone of the current printing element, and determining that the element state of the current printed element is the second state.

In some embodiments, the determining of the element state corresponding to the current printed element based on the positional relationship between the current printed element and the heat-affected zone of the current printing element and the temperature parameter of the current printed element includes: determining that the current printed element is located outside the heat-affected zone of the current printing element, and determining the element state of the current printed element based on a cooling rate of the current printed element.

In some embodiments, the determining of the element state of the current printed element based on the cooling rate of the current printed element includes: determining that the cooling rate of the current printed element is smaller than a preset cooling rate threshold, and determining that the element state of the current printed element is the first state.

In some embodiments, the determining of the element state of the current printed element based on the cooling rate of the current printed element includes: determining that the cooling rate of the current printed element is greater than a preset cooling rate threshold, and determining that the element state of the current printed element is an element state of a previous printing time window.

In some embodiments, the first temperature prediction method is determined based on a temperature of the current printed element in a previous printing time window, an ambient temperature, and a length of each printing time window.

In a second aspect, this specification provides a computing device for temperature prediction in 3D printing, including: at least one storage medium, storing at least one set of instructions for performing temperature prediction processing for 3D printing; and at least one processor, in communication with the at least one storage medium, where when the computing device is operating, the at least one processor reads the at least one set of instructions and executes the method of the first aspect according to instructions of the at least one set of instructions.

From the above technical solution, it can be seen that the 3D printing temperature prediction method and system provided in this specification determine the element state corresponding to a printed element based on the positional relationship between the printed element and the current printing element, and perform temperature prediction using the temperature prediction method corresponding to the element state. In this solution, the positional relationship between the printed element and the current printing element can characterize whether the currently printed element is located within the heat-affected zone of the current printing element, and whether the current printing element is affected by heat transfer from the currently printed element. For a printed element, different positional relationships correspond to different element states, while different element states correspond to different temperature prediction methods, and the computational load of different temperature prediction methods differs. Therefore, for printed elements, a temperature prediction method with different computational loads can be selected for temperature prediction based on the positional relationship, rather than uniformly adopting a temperature prediction method with a large computational load for all printed elements, thereby improving the computational efficiency of temperature prediction and ensuring the accuracy of temperature prediction.

Other functions of the 3D printing temperature prediction method and system provided in this specification will be partially listed in the following description. Based on the description, the contents introduced in the following figures and examples will be apparent to a person skilled in the art. The inventive aspects of the 3D printing temperature prediction method and system provided in this specification can be fully explained through practice or use of the methods, devices, and combinations described in the detailed examples below.

## Brief Description of the Drawings

In order to more clearly illustrate the technical solutions in the embodiments of this specification, the drawings required for the description of the embodiments will be briefly introduced below. It is apparent that the drawings described below are merely some embodiments of this specification. For a person skilled in the art, other drawings can also be obtained based on these drawings without creative effort.

FIG. 1 shows a hardware architecture diagram of a computing device provided according to some embodiments of this

EP 4 759 515 A1

specification;

FIG. 2 shows a flowchart of a 3D printing temperature prediction method provided according to some embodiments of this specification;

FIG. 3 shows a flowchart of determining an element state provided according to some embodiments of this specification;

FIG. 4A and FIG. 4B show a flowchart of a specific implementation process for determining the element state provided according to some embodiments of this specification;

FIG. 5A shows a schematic diagram of the heat-affected zone when the interval distance is 1R provided according to some embodiments of this specification;

FIG. 5B shows a schematic diagram of the heat-affected zone when the interval distance is 2R provided according to some embodiments of this specification;

FIG. 5C shows a schematic diagram of the heat-affected zone when the interval distance is 3R provided according to some embodiments of this specification;

FIG. 6 is a schematic diagram of some contact relationships provided according to some embodiments of this specification;

FIG. 7 is a schematic diagram of additional contact relationships provided according to some embodiments of this specification;

FIG. 8 is a schematic diagram of a temperature prediction curve provided according to some embodiments of this specification;

FIG. 9 is a schematic diagram of a wire-arc additive manufacturing wall structure and temperature prediction sampling points provided according to some embodiments of this specification;

FIG. 10 is a schematic diagram of a comparison result between temperature prediction data obtained by the 3D printing temperature prediction method provided according to some embodiments of this specification and temperature prediction data obtained using the birth-death element technology; and

FIG. 11 is a schematic diagram of a comparison result between the computation time of the 3D printing temperature prediction method provided according to some embodiments of this specification and the computation time obtained using the birth-death element technology.

## Detailed Description of Embodiments

The following description provides specific application scenarios and requirements of this specification, with the purpose of enabling a person skilled in the art to make and use the contents of this specification. For a person skilled in the art, various local modifications to the disclosed embodiments are apparent, and the general principles defined herein can be applied to other embodiments and applications without departing from the spirit and scope of this specification. Therefore, this specification is not limited to the illustrated embodiments, but is consistent with the broadest scope as defined by the claims.

The terminology used herein is intended solely for the purpose of describing specific example embodiments and is not restrictive. For example, unless explicitly stated otherwise in the context, the singular forms "a," "an," and "the" as used herein can also include the plural forms. When used in this specification, the terms "comprise," "include," and/or "contain" mean that the associated integers, steps, operations, elements, and/or components are present, but do not preclude the presence of one or more other features, integers, steps, operations, elements, components, and/or groups, or the addition of other features, integers, steps, operations, elements, components, and/or groups in the system/method.

In view of the following description, the features and other characteristics of this specification, as well as the operation and function of relevant structural elements, and the combination and manufacturability of components, can be significantly improved. With reference to the drawings, all of these form a part of this specification. However, it should be clearly understood that the drawings are provided solely for illustration and description purposes and are not intended to limit the scope of this specification. It should also be understood that the drawings are not necessarily drawn to scale.

The flowcharts used in this specification illustrate operations implemented by a system according to some embodiments of this specification. It should be clearly understood that the operations in the flowcharts may not be performed in sequence. On the contrary, the operations may be performed in reverse order or simultaneously. In addition, one or more additional operations may be added to the flowcharts. One or more operations may be removed from the flowcharts.

Before describing the specific embodiments of this specification, the application scenarios of this specification are introduced as follows:

The 3D printing temperature prediction method provided in this specification can be applied to any 3D printing scenario. For example, in 3D printing scenarios such as medical devices, architectural models, component printing, toys, and daily necessities, the 3D printing temperature prediction method of this specification can be used to predict the temperature during the printing process of the object to be printed, and the printing process can be adjusted based on the temperature prediction results to improve the quality of the printed object. A person skilled in the art should understand that the 3D printing temperature prediction method and system described in this specification, when applied to other usage scenarios, are also within the protection scope of this specification.

The 3D printing temperature prediction method provided in this specification can be applied to any 3D printing technology. For example, in 3D printing technologies such as fused deposition modeling (FDM), wire-arc additive manufacturing (WAAM), selective laser melting (SLM), selective laser sintering (SLS), and electron beam freeform fabrication (EBF), the 3D printing temperature prediction method of this specification can be used to predict the temperature during the printing process of the object to be printed, and the printing process can be adjusted based on the temperature prediction results to improve the quality of the printed object. A person skilled in the art should understand that the 3D printing temperature prediction method and system described in this specification, when applied to other 3D printing technologies, are also within the protection scope of this specification.

The 3D printing temperature prediction method provided in this specification can be applied in simulating the printing process, for example, applied to simulation programs such as finite element, finite volume, and finite difference numerical simulation programs.

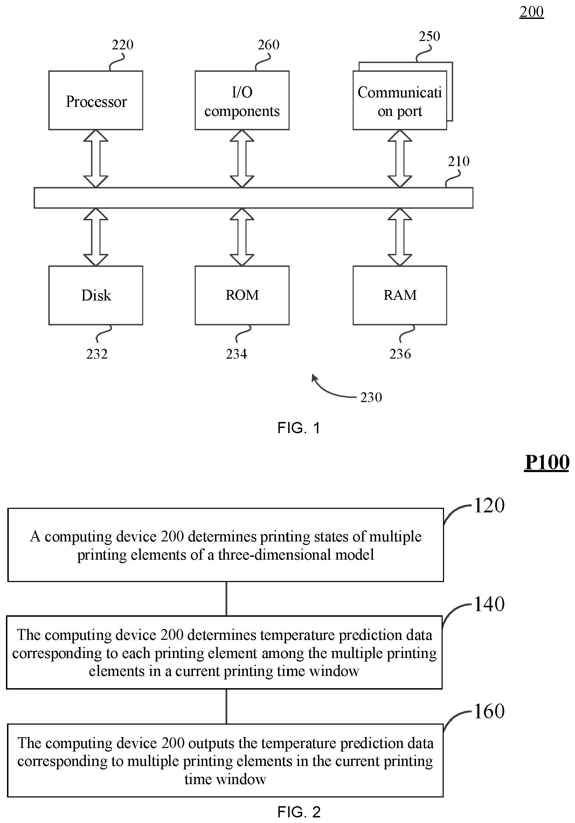

FIG. 1 shows a hardware architecture diagram of a computing device 200 provided according to some embodiments of this specification. The computing device 200 can be used for 3D printing temperature prediction.

The computing device 200 can be a device for predicting the temperature of materials during the 3D printing process. In some embodiments, the 3D printing temperature prediction method can be executed on the computing device 200. In this case, the computing device 200 can store data or instructions for executing the 3D printing temperature prediction method described in this specification, and can execute or be used to execute the data or instructions. In some embodiments, the computing device 200 can include hardware devices with data information processing capabilities and programs necessary to drive the hardware devices to operate. In some embodiments, the computing device 200 can include mobile devices, tablets, laptops, personal computers, servers, server clusters, distributed servers, cloud servers, or any combination thereof. In some embodiments, the computing device 200 can have one or more applications (APPs) installed. The APPs include, but are not limited to: web browser APPs, search APPs, chat APPs, shopping APPs, video APPs, finance APPs, instant messaging tools, email client devices, social platform software, and so on. In some embodiments, the computing device 200 can have a target APP installed. The target APP can provide the computing device 200 with the ability to simulate the 3D printing process and perform temperature prediction during the simulated 3D printing process. The target APP can be simulation software such as finite element simulation software. In this specification, the finite element simulation software uses mathematical approximation methods to simulate real physical systems (such as geometry and load conditions). Specifically, the finite element simulation software provided in this application can be used to simulate real 3D printing processes.

As shown in FIG. 1, the computing device 200 can include at least one storage medium 230 and at least one processor 220. In some embodiments, the computing device 200 can further include a communication port 250 and an internal communication bus 210. Additionally, the computing device 200 can include I/O components 260.

The internal communication bus 210 can connect different system components, including the storage medium 230, the processor 220, and the communication port 250.

The I/O components 260 support input/output between the computing device 200 and other components.

The communication port 250 is used for data communication between the computing device 200 and the outside, for example, the communication port 250 can be used for data communication between the computing device 200 and an external network. The communication port 250 can be a wired communication port or a wireless communication port.

The storage medium 230 can include data storage devices. The data storage devices can be non-transitory storage media or transitory storage media. For example, the data storage devices can include one or more of a disk 232, a read-only memory (ROM) 234, or a random access memory (RAM) 236. The storage medium 230 further includes at least one instruction set stored in the data storage devices. The instructions are computer program code, which can include programs, routines, objects, components, data structures, procedures, modules, and so on, for executing the 3D printing temperature prediction method provided in this specification.

The at least one processor 220 can be communicatively connected to at least one storage medium 230 and the communication port 250 via the internal communication bus 210. The at least one processor 220 is configured to execute the above-mentioned at least one instruction set. When the computing device 200 is operating, the at least one processor 220 reads the at least one instruction set and, according to the instructions of the at least one instruction set, executes the 3D printing temperature prediction method provided in this specification. The processor 220 can perform all steps included in the 3D printing temperature prediction method. The processor 220 can be in the form of one or more processors. In some embodiments, the processor 220 can include one or more hardware processors, such as a microcontroller, microprocessor, reduced instruction set computer (RISC), application-specific integrated circuit (ASIC), application-specific instruction set processor (ASIP), central processing unit (CPU), graphics processing unit (GPU), physics processing unit (PPU), microcontroller unit, digital signal processor (DSP), field-programmable gate array (FPGA), advanced RISC machine (ARM), programmable logic device (PLD), any circuit or processor capable of executing one or more functions, or any combination thereof. For illustrative purposes only, this specification describes only one processor 220 in the computing device 200. However, it should be noted that the computing device 200 can include multiple processors, and therefore the operations and/or method steps disclosed in this specification can be executed by a single processor as described, or jointly by multiple processors. For example, if the processor 220 of the computing device 200 executes step A and step B in this specification, it should be understood that steps A and B can also be executed jointly or separately by two different processors 220 (e.g., the first processor executes step A, the second processor executes step B, or the first and second processors jointly execute steps A and B).

FIG. 2 shows a flowchart of a 3D printing temperature prediction method P100 provided according to some embodiments of this specification. As mentioned above, the computing device 200 can execute the 3D printing temperature prediction method P100 of this specification. Specifically, the computing device 200 can read the instruction set stored in its local storage medium and, according to the provisions of the instruction set, execute the 3D printing temperature prediction method P100 of this specification.

As mentioned above, numerical simulation software can simulate the actual 3D printing process. In the actual 3D printing process, the printing material is added to the printing device in a high-temperature fluid state and then extruded and cooled through the print nozzle. During the printing process, the material gradually accumulates in a molten state, or is maintained in a molten state by a moving heat source (such as a heating element), and is then stacked layer by layer on a continuously evolving surface, ultimately forming the product to be printed. Numerical simulation software can simulate the actual 3D printing process by setting printing parameters. For ease of illustration, before describing the method P100, we first introduce the parameter setting process of the numerical simulation software.

First, the computing device 200 can obtain a three-dimensional model for 3D printing. The three-dimensional model can be a software simulation model corresponding to the physical object to be 3D printed. The three-dimensional model can be created by modeling the object using computer-aided design software, downloaded directly from 3D printing model websites, or obtained by scanning a physical object using scanning software. Software used to create three-dimensional models includes, but is not limited to, AutoCAD, AutoDesk123D, Tinkercad, SolidWorks, Pro-E, Catia, Cimatron, SketchUp, OpenSCAD, UG, 3D Max, Maya, Rhino, Blender, and so on. This specification is not limited thereto.

The computing device 200 can divide the three-dimensional model into M printing elements based on a predetermined division rule, where M is a positive integer. The M printing elements can be obtained as follows: for example, after the computing device 200 obtains the printing instructions, it determines the length $L_{road}$ of the printing path based on the printing instructions; based on the length $L_{road}$ of the printing path and the average element length $\Delta x_{avg}$, it determines the number of printing elements corresponding to the printing path; and based on the length $L_{road}$ of the printing path and the number of printing elements, it determines the length $\Delta x$ of each printing element; finally, the printing path is divided based on the length $\Delta x$ of the printing elements, thereby obtaining the printing elements corresponding to the printing path.

The computing device 200 can read a printing file, such as G-code, to obtain printing instructions. The G-code includes G1 instructions. The G-code can also include other printing parameters, such as layer width W, layer height H, and the temperature of the print nozzle $T_{nozzle}$. The G1 instruction, also referred to as a printing instruction, includes a sequence of coordinate points arranged in order or chronological sequence. The computing device 200 can control the print nozzle based on the G1 instruction to move along the coordinate points in chronological order, moving from the current position to a specified position to perform printing. The path traveled by the print nozzle from the current position to the specified position is referred to as the printing path. For ease of description, the G1 instruction is defined as the printing path. The three-dimensional model can include multiple printing paths. The computing device 200 can number the multiple printing paths. For example, Road (I, J) can represent the J-th printing path on the I-th layer. The computing device 200 can also classify the multiple printing paths to select those that actually perform printing operations. For ease of description, the printing paths that actually perform printing operations are defined as target printing paths. It should be noted that the target printing paths are the objects of execution in method P100. For ease of description, the following references to printing paths can refer to target printing paths. The computing device 200 can further calculate, for each printing path, the length $L_{road}$, the start time $t_s$, and the end time $t_e$ based on the coordinate points corresponding to each printing path and their chronological sequence.

The computing device 200 can determine the number of printing elements corresponding to each printing path using the following formula (1):

$$n_{road} = Round\left( L_{road} / \Delta x_{avg} \right) + 1 \qquad (1)$$

In formula (1), Round is the rounding operator; $L_{road}$ is the length of the printing path, which can be obtained based on the distance between the current position coordinates and the specified position coordinates corresponding to the printing path; $\Delta x_{avg}$ is the average element length (a calculation parameter), which can be obtained from the initial parameter table. The initial parameter table contains the printing parameters at the initial time and can be set by the user.

The initial parameter table can be referred to as shown in Table 1:

Table 1 Initial Parameter Table

| Process parameters | Bottom plate temperature | $T_{plat}$ | Ambient temperature | $Tamb$ |
|---|---|---|---|---|
| | Extrusion temperature correction factor | $k$ | | |
| Material parameters | Density | $\rho$ | Thermal conductivity | $\lambda$ |
| | Specific heat | $C$ | Emissivity | $\varepsilon$ |
| Calculation parameters | Average element length | $\Delta x_{avg}$ | Average time step | $\Delta t_{avg}$ |
| | Convective heat transfer coefficient | $h_{conv}$ | Platform heat transfer coefficient | $h_{plat}$ |
| | Contact heat transfer coefficient | $h_{cont}$ | | |

The length $\Delta x$ of the printing element can be determined by the following formula (2) for computing device 200:

$$\Delta x = L_{road} / n_{road} \qquad (2)$$

In formula (2), $L_{road}$ is the length of the printing path; $n_{road}$ can be obtained based on formula (1).

The computing device 200 performs the above steps for each printing path among all printing paths, thereby obtaining M printing elements corresponding to all printing paths. The computing device 200 can select multiple printing elements from the M printing elements as sampling points for temperature prediction. The multiple printing elements can be a subset of the M printing elements or all of the M printing elements; this specification does not impose a limitation in this regard.

The computing device 200 can further determine a time step $\Delta t$. The time step $\Delta t$ can be the smallest time interval for performing temperature prediction during the simulated printing process. That is, when performing temperature prediction, the computing device 200 can update the temperature based on the time step $\Delta t$. The time step $\Delta t$ can be determined based on the minimum element length and the material parameters of the three-dimensional model. The time step $\Delta t$ can be calculated using the following formula (3):

$$\Delta t = \frac{\rho C \left( \Delta x_{\min} \right)^2}{2\lambda} \eta \qquad (3)$$

In formula (3), $\rho$ is the density of the printing material; $C$ is the specific heat of the printing material; $\lambda$ is the thermal conductivity of the printing material; $\rho$, $C$, and $\lambda$ can all be obtained from Table 1; $\eta$ is a step adjustment factor, which can, for example, take a value of 0.5; $\Delta x_{\min}$ is the minimum element length among the element lengths of printing elements corresponding to all printing paths Road of all printing types, which can be obtained by the computing device 200 after determining the element lengths of the printing elements corresponding to multiple printing paths based on formulas (1) and (2), by selecting the minimum element length from among the element lengths of the printing elements corresponding to the multiple printing paths.

The computing device 200 can determine, based on the start time $t_s$ and end time $t_e$ of each printing path, the total printing time window for each printing path during printing. The computing device 200 can further divide the total printing time window of each printing path into multiple printing time windows based on the time step $\Delta t$. The length of each printing time window can be the time step $\Delta t$. The method P100 can perform temperature prediction for some or all of the printing time windows corresponding to all printing paths. For ease of description, the printing time windows in which the method P100 is executed are defined as at least one printing time window. The at least one printing time window can be part or all of all the printing time windows corresponding to all printing paths. The method P100 can perform temperature prediction on the material in each printing time window within the at least one printing time window.

As shown in FIG. 2, the method P100 can include performing steps S120 to S180 for each printing time window within the at least one printing time window. For ease of description, the printing time window in which the method P100 is being executed at the current moment is defined as the current printing time window, and the start time of the current printing time window is defined as $t^{n-1}$, and the end time is defined as $t^n$. Thus, the current time window can be represented as $[t^{n-1}, t^n]$. The time step $\Delta t$ is the length of the current time window.

S120: A computing device 200 determines printing states of multiple printing elements of a three-dimensional model.

Within each printing time window, the computing device 200 needs to determine the printing state of the multiple printing elements. The printing state can include printed elements, current printing elements, and unprinted elements. At the same moment, each printing element corresponds to one of these printing states, and different printing elements can have the same or different printing states. Before printing begins, the mesh elements in the three-dimensional model are referred to as printing elements. As the printing process progresses, the printing state of the printing elements changes. Printed elements are those that have been extruded or printed prior to the current printing time window. Current printing elements are those being extruded or printed within the current printing time window. Unprinted elements are those that have not been extruded or printed either before or during the current printing time window. For example, if a printing element has not been printed in the current time window or any previous window, its corresponding printing state is an unprinted element. If a printing element is printed in the current printing time window, its corresponding printing state is a current printing element. If a printing element was printed before the current time window, its corresponding printing state is a printed element. Each printing element among the multiple printing elements can have one of the three states, printed element, current printing element, or unprinted element, within the current printing time window. Before printing starts, the printing state of all printing elements is unprinted. When printing begins, the printing elements printed in the initial printing time window are marked as current printing elements. As the printing process continues, the printing state of the elements printed before the current printing time window is updated to printed elements.

Continuing with reference to FIG. 2, after step S120, the method P100 may further include step S140.

S140: The computing device 200 determines temperature prediction data corresponding to each printing element among the multiple printing elements in a current printing time window.

As previously described, the multiple printing elements can include printed elements, current printing elements, and unprinted elements. In step S140, the computing device 200 can determine the element state corresponding to each of the printed elements, current printing elements, and unprinted elements, respectively, and perform temperature prediction for each printing element based on the temperature prediction method corresponding to its element state. Different element states can correspond to different temperature prediction methods.

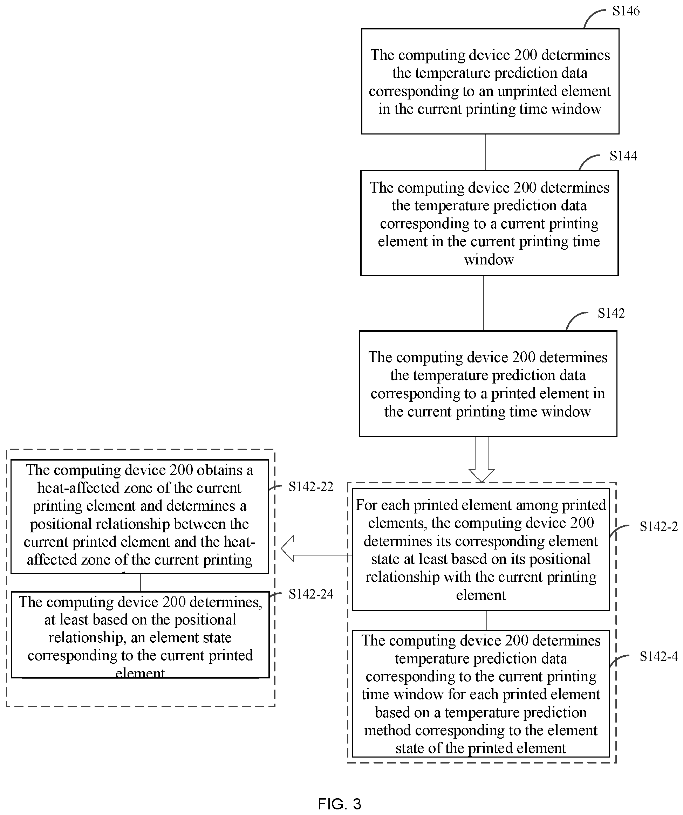

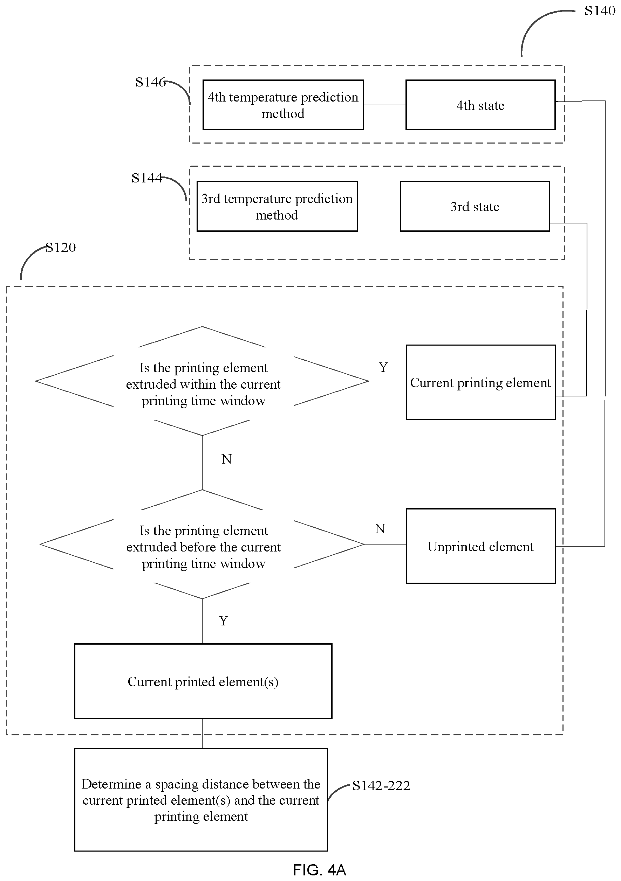

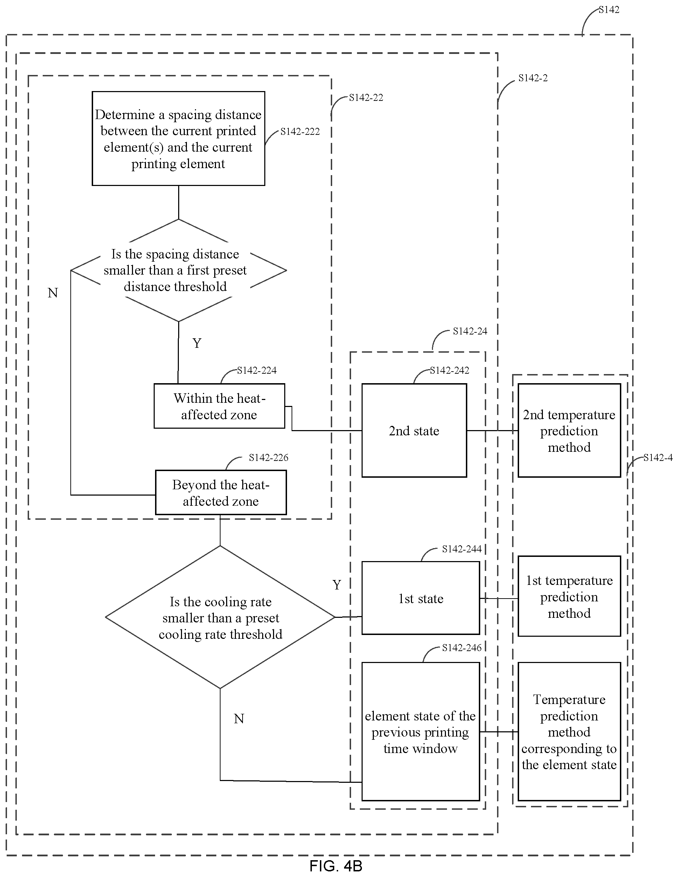

FIG. 3 illustrates a flowchart for determining element state according to some embodiments of this specification. FIG. 4A and FIG. 4B illustrate a flowchart of the specific implementation process for determining element state according to some embodiments of this specification. FIGS. 3 and 4 show the method for determining the element state of printing elements with different printing states. When executing step S140, the computing device 200 can traverse all the printing elements among the multiple printing elements, determine the element state corresponding to each printing element, and perform temperature prediction for the printing element using the temperature prediction method corresponding to its element state. As shown in FIGS. 3 and 4, step S140 can include:

S142: For each printed element of printed elements, the computing device 200 determines its corresponding element state at least based on its positional relationship with the current printing element.

Specifically, step S142 can include:

S142-2: The computing device 200 can, for each printed element among the printed elements, determine its corresponding element state at least based on its positional relationship with a current printing element.

During the printing process, the printing material extruded by the print head carries heat. As the printing process progresses, in the current printing time window, the current printing elements can be deposited over the printed elements, forming a certain positional relationship with the printed elements. This positional relationship affects the heat transfer from the current printing elements to the surrounding printed elements. The positional relationship can be expressed by distance relationships. It can also be expressed by orientation relationships. For example, when a printed element is relatively far from the current printing element (i.e., at a greater distance), the printed element is less affected by heat transfer from the current printing element; when a printed element is relatively close to the current printing element (i.e., at a shorter distance), the printed element is more affected by heat transfer from the current printing element. Within each printing time window, the computing device 200 can determine the element state of each printed element based on its positional relationship with the current printing elements, and perform temperature prediction using the temperature prediction method corresponding to its element state. Different positional relationships may correspond to different element states. Different element states correspond to different temperature prediction methods. The computational load of the different temperature prediction methods can also vary. The element state of a printed element can include a first state and a second state. The first and second states correspond to different temperature prediction methods. Although the computational load of these temperature prediction methods differs, their prediction accuracy can achieve the same or similar effect. Therefore, in method P100, for printed elements, the computing device 200 can select temperature prediction methods with different computational loads based on their corresponding element states, thereby improving the computational efficiency of temperature prediction. The following provides a detailed description of how to determine the element state of each printed element. For ease of description, the printed element whose element state is currently being determined is defined as the current printed element. The current printed element determines its element state as follows.

Continuing with reference to FIGS. 3 and 4, step S142-2 can include:

S142-22: The computing device 200 obtains a heat-affected zone of the current printing element and determines a positional relationship between the current printed element and the heat-affected zone of the current printing element;
S142-24: The computing device 200 determines, at least based on the positional relationship, an element state corresponding to the current printed element.

Since the print head temperature is relatively high, the current printing element is extruded in a liquid state. Therefore, the current printing element has a high temperature when extruded in the current time window. The current printing element transfers heat to the surrounding printed elements during the current time window, thereby affecting the printing quality.

The heat-affected zone characterizes the area influenced by heat transfer. The heat-affected zone of the current printing element can represent the area affected by heat transfer from the current printing element. The heat-affected zone can be expressed using a distance threshold, such as a first preset distance threshold. The range of the heat-affected zone can be obtained in various ways, for example, experimentally, statistically, via machine learning, or any combination thereof. The range of the heat-affected zone can be related to the cooling rate of the printing material, the speed of heat transfer, and the temperature of the print head. The positional relationship can include whether the current printed element is inside or outside the heat-affected zone of the current printing element. The positional relationship indicates whether the current printed element is within the heat-affected zone of the current printing element and whether the current printing element is affected by heat transfer from the current printed element. If the current printed element is inside the heat-affected zone of the current printing element, it indicates that the current printing element is strongly influenced by heat transfer from the current printed element. If the current printed element is outside the heat-affected zone of the current printing element, it indicates that the current printing element is not affected, or is minimally affected, by heat transfer from the current printed element, and such influence can be considered negligible.

Continuing with reference to FIG. 4A and FIG. 4B, step S142-22 can include:

S142-222: The computing device 200 determines a spacing distance between a current printed element and the current printing element.
S142-224: The computing device 200 determines that when the spacing distance is less than a first preset distance threshold, the current printed element is within the heat-affected zone of the current printing element.
S142-226: The computing device 200 determines that when the spacing distance is greater than the first preset distance threshold, the current printed element is outside the heat-affected zone of the current printing.

The computing device 200 can obtain the position coordinates of the current printed element and the position coordinates of the current printing element, and based on these coordinates, determine the spacing distance between the current printed element and the current printing element; it can then compare the spacing distance with the first preset distance threshold to determine whether the current printed element is within the heat-affected zone of the current printing element.

For example, if the position coordinates of the current printed element are (x1, y1) and the position coordinates of the current printing element are (x2, y2), the computing device 200 can determine the spacing distance L between the current printed element and the current printing element based on the following formula (4):

$$L = \sqrt{(x2 - x1)^2 + (y2 - y1)^2} \qquad (4)$$

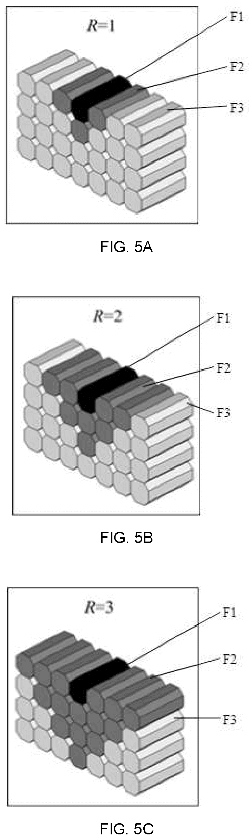

FIG. 5A illustrates a schematic diagram of the heat-affected zone when the spacing distance is 1R according to some embodiments of the present disclosure. FIG. 5B illustrates a schematic diagram of the heat-affected zone when the spacing distance is 2R according to some embodiments of the present disclosure. FIG. 5C illustrates a schematic diagram of the heat-affected zone when the spacing distance is 3R according to some embodiments of the present disclosure.

The range of the first preset distance threshold can be obtained by various methods, such as experimental methods, statistical methods, machine learning methods, or any combination thereof. The range of the first preset distance threshold can be related to the cooling rate of the printing material, the heat transfer rate, and the temperature of the printing nozzle. Referring to FIGS. 5A, 5B, and 5C, when the cross-section of a printing element is a regular octagon, the first preset distance threshold can take values of the radius of one printing element R, the radius of two printing elements 2R, or the radius of three printing elements 3R. Taking FIG. 5A as an exemplary illustration, in FIG. 5A, the printing element shown as F1 is the current printing element, the printing element shown as F2 is a printed element within the heat-affected zone of the current printing element, and the printing element shown as F3 is a printed element outside the heat-affected zone of the current printing element.

Continuing with reference to FIG. 4A and FIG. 4B, in step S142-24, the computing device 200 can determine the element state corresponding to the current printed element at least based on the positional relationship, which can include: the computing device 200 determining the element state of the current printed element based on the positional relationship between the current printed element and the current printing element; or determining the element state corresponding to the current printed element based on both the positional relationship between the current printed element and the current printing element and the temperature parameters of the current printed element; or determining the element state of the current printed element based on the spacing distance between the current printed element and the current printing element and a comparison result with a second preset distance threshold.

Continuing with reference to FIG. 4A and FIG. 4B, when the computing device 200 determines the element state of the current printed element based on the positional relationship between the current printed element and the current printing element, it can include step S142-242: when it is determined that the current printed element is within the heat-affected zone of the current printing element, the computing device 200 determines the element state of the current printed element as the second state. The second state can also be referred to as the thermal state. The second state indicates that the current printed element will be affected by the heat transfer from the current printing element.

The temperature parameters can include the cooling rate. Determining the element state of the current printed element based on the positional relationship between the current printed element and the current printing element, and the temperature parameters of the printed element, can include: the computing device 200 determining that the current printed element is outside the heat-affected zone of the current printing element, and then determining the element state of the current printed element based on its cooling rate.

In some embodiments, the computing device 200 may also determine the element state of the printed element based on the comparison between the cooling rate of the current printed element and the ambient temperature. For example, if the computing device 200 determines that the deviation between the cooling rate of the current printed element and the current ambient temperature is within a preset error range, it determines the element state of the printed element as a fifth state. The fifth state can also be referred to as a stable state, meaning that the printed element in the fifth state is not affected by the heat transfer from the current printing element, and its temperature has approached the ambient temperature, reaching a stable condition. When the printed element is in the fifth state, its temperature does not need to be updated; that is, the temperature of the printed element in the current printing time window remains the same as in the previous printing time window.

In some embodiments, the computing device 200 can determine the element state of the printed element based on the comparison between the cooling rate of the current printed element and a preset cooling rate threshold.

Continuing with reference to FIG. 4A and FIG. 4B, when the computing device 200 determines the element state of the printed element based on the comparison between the cooling rate of the current printed element and the preset cooling rate threshold, it can include: S142-244: When the cooling rate of the current printed element is less than the preset cooling rate threshold, the computing device 200 determines that the element state of the current printed element is the first state. The cooling rate threshold can be obtained through various methods, such as experimental methods, statistical methods, machine learning methods, or any combination thereof. The first state can also be referred to as the cold state, indicating that the current printed element is not affected, or is only minimally affected, by the heat transfer from the current printing element. At the same time, the cooling rate of the current printed element has decreased, which indicates that the temperature of the current printed element has approached the ambient temperature.

Continuing with reference to FIG. 4A and FIG. 4B, when the computing device 200 determines the element state of the printed element based on the comparison between the cooling rate of the current printed element and the preset cooling rate threshold, it can include: S142-246: When the cooling rate of the current printed element is greater than the preset cooling rate threshold, the computing device 200 can determine that the element state of the current printed element remains the same as its element state in the previous printing time window. This indicates that although the current printed element is not affected, or is only minimally affected, by the heat transfer from the current printing element, its high cooling rate shows that the temperature of the current printed element has not yet approached the ambient temperature. In other words, the element state of the current printed element is maintained as it was in the previous printing time window. For example, if the element state of the current printed element in the previous printing time window was the first state, then in the current printing time window, its element state remains the first state; if it was the second state in the previous printing time window, then it remains the second state in the current printing time window.

It should be noted that when the cooling rate of the current printed element is equal to the preset cooling rate threshold, the computing device 200 may determine the element state of the current printed element as the first state, or it may determine the element state as the element state from the previous printing time window. The present specification does not impose any limitation in this regard.

The cooling rate threshold can be 0.01 °C/s, 1 °C/s, or the like. A person skilled in the art can set other cooling rate thresholds beyond the two exemplary values according to actual requirements. The present specification does not impose any limitation in this regard. The cooling rate can be calculated using the following formula (5):

$$v = \left| \frac{T_i^{n-1} - T_i^{n-2}}{\Delta t} \right| \qquad (5)$$

In formula (5), i is the number of the current printed element among all printing elements; v is the cooling rate; $T_i^{n-1}$ is the temperature of the current printed element at time $t^{n-1}$; $t^{n-1}$ can be the start time of the current printing time window; $T_i^{n-2}$ is the temperature of the current printed element at time $t^{n-2}$, $t^{n-2}$ can be the start time of the previous printing time window before the current printing time window; $\Delta t$ is the length of the printing time window, that is, the aforementioned time step.

It should be noted that the position of the current printing element in different printing time windows is different, and the positional relationship between it and the printed element will also change. Therefore, the element state of the printing element changes dynamically. For example, in the current printing time window, the element state corresponding to printed element A is the second state. As the printing process progresses, the element state corresponding to printed element A may change to the first state, and then change from the first state to the second state again. That is to say, during the printing process, the printing state of each printing element may switch back and forth between the second state and the first state.

In some embodiments, when computing device 200 determines that the current printed element is located outside the heat-affected zone of the current printing element, it can also directly determine that the element state of the current printed element is the first state.

In some embodiments, when the distance between the current printed element and the current printing element is greater than a second preset distance threshold (greater than the first preset distance threshold), the element state of the current printed element can be determined to be the first state or the fifth state.

Continuing to refer to FIG. 3 and FIG. 4A and FIG. 4B, after step S142-2, step S142 may further include:
S142-4: The computing device 200 determines temperature prediction data corresponding to the current printing time window for each printed element based on a temperature prediction method corresponding to the element state of the printed element.

As introduced above, the element state may include a first state and a second state. The first state may correspond to a first temperature prediction method. The second state may correspond to a second temperature prediction method. That is to say, the temperature prediction method may include a first temperature prediction method and a second temperature prediction method.

The first temperature prediction method can be determined based on the temperature of the current printed element in the previous printing time window, the ambient temperature, and the length of each printing time window. The first temperature prediction method can be expressed as formula (6):

$$T_i^n = T_i^{n-1} - \Delta t K \left( T_i^{n-1} - T_{amb} \right) \qquad (6)$$

In formula (6), i is the number of the current printing element; $T_i^n$ is the temperature of the current printing element at time $t^n$; $t^n$ is the end time of the current printing time window; $T_i^{n-1}$ is the temperature of the current printing element at time $t^{n-1}$, $t^{n-1}$ is the end time of the previous time window of the current printing time window, and is also the start time of the current printing time window; $\Delta t$ is the aforementioned time step, calculated by formula (3); $T_{amb}$ is the ambient temperature, which can be obtained from Table 1; K is the Newton cooling coefficient, which can be set to 0.2.

The second temperature prediction method can be determined based on the temperature of the current printed element in the previous printing time window and the temperature of the printed element in contact with the current printed element in the previous printing time window. The second temperature prediction method can be expressed as the following formula (7):

$$T_i^n = T_i^{n-1} - \frac{\Delta t}{\rho CWH\Delta x} \begin{bmatrix} \lambda WH \dfrac{2T_i^{n-1} - T_{i+1}^{n-1} - T_{i-1}^{n-1}}{\Delta x} \\[2mm] + h_{conv} A_{free} \left(T_i^{n-1} - T_{amb}\right) \\[2mm] + \varepsilon \sigma A_{free} \left(\left(T_i^{n-1}\right)^4 - \left(T_{amb}\right)^4\right) \\[2mm] + h_{plat} A_{plat} \left(T_i^{n-1} - T_{plat}\right) \\[2mm] + \displaystyle\sum_j h_{cont} A_{free} \left(T_i^{n-1} - T_j^{n-1}\right) \end{bmatrix} \qquad (7)$$

In formula (7), i is the number of the current printing element; $T_i^n$ is the temperature of the current printing element at time $t^n$; $t^n$ is the end time of the current printing time window; $T_i^{n-1}$ is the temperature of the current printing element at time $t^{n-1}$, $t^{n-1}$ is the end time of the previous time window of the current printing time window; $\Delta t$ is the time step, obtained from formula (5); $\Delta x$ is the element length; W and H are the layer width and layer height respectively; $\rho$, C, $\lambda$, $h_{conv}$, $\varepsilon$, $h_{plat}$, $h_{cont}$, $T_{plat}$, $T_{amb}$ are printing parameters, all obtained from Table 1; $\sigma$ is the Stefan-Boltzmann constant; $A_{free}$ is the element free surface area, which can be obtained based on the sum of the areas of the non-contact surfaces of the current printing element; $A_{plat}$ is the contact area between the current printing element and the bottom plate, if the current printing element is located on the 1st layer, then $A_{plat}$ can be obtained based on the product of the element length $\Delta x$ and the layer width W of the current printing element, W can be read from the G-code file; if the current printing element is not located on the 1st layer, then $A_{plat}$ is zero; $T_{i+1}^{n-1}$ is the temperature of the front contact element at time $t^{n-1}$; $T_{i-1}^{n-1}$ is the temperature of the rear contact element at time $t^{n-1}$; $T_j^{n-1}$ is the temperature of the left contact element, right contact element, upper contact element or lower contact element of the current printing element at time $t^{n-1}$.

The front contact element, rear contact element, upper contact element, lower contact element, left contact element and right contact element respectively characterize the contact relationship between the current printed element and the current printing element. The above contact relationships are introduced below in conjunction with the accompanying drawings.

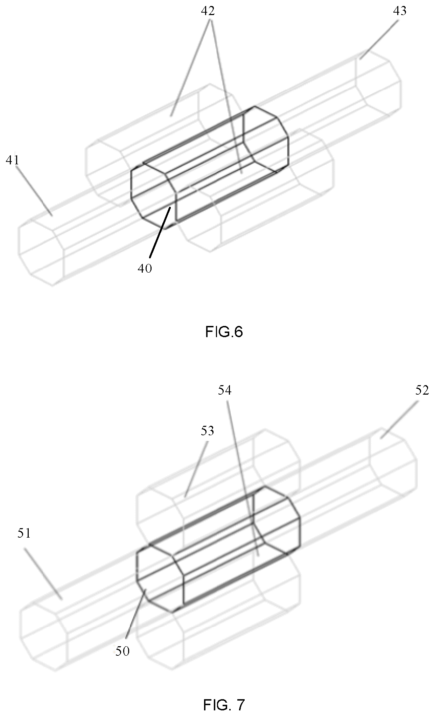

FIG. 6 is a schematic diagram of some contact relationships provided according to some embodiments of this specification. As shown in FIG. 6, reference numerals 41, 42, and 43 denote current printed elements, and reference numeral 40 denotes the current printed element. The current printed elements 41, 42, and 43 and the current printed element 40 are located on the same print layer, and the current printed element 41 is located in front of the current printed element, then the current printed element 41 is the front contact element of the current printed element 40. Similarly, when the current printed elements 41, 42, and 43 and the current printed element 40 are located on the same layer, and the current printed elements 41, 42, and 43 are respectively located behind, to the left, and to the right of the current printed element 40, the current printed elements 42 and 43 are respectively the rear contact element, left contact element, and right contact element of the current printed element. Here, front, rear, left, and right are determined with reference to the printing path direction of the current printed element. For example, the two ends of the current printed element are A end and B end, where A end is the starting print position and B end is the designated print position; then the current printed element located at the B end is the front contact element of the current printed element, the current printed element located at the A end is the rear contact element of the current printed element, and the current printed elements located on both sides of the current printed element are the left contact element and right contact element of the current printed element, respectively.

FIG. 7 is a schematic diagram of some other contact relationships provided according to the embodiments of this specification. As shown in FIG. 7, the current printed elements 51 and 52 are respectively the front contact element and rear contact element of the current printed element 50. The current printed elements 53 and 54 are located on different print layers from the current printed element 50, and the current printed element 53 is located above the current printed element 50, then the current printed element 53 is the upper contact element of the current printed element 50. The current printed element 54 is located below the current printed element 50, then the current printed element 54 is the lower contact element of the current printed element 50. Here, up and down can be determined with reference to the base plate. For example, when the current printed element and the current printed element are located on different print layers, and the current printed element is located between the current printed element and the base plate, it is the lower contact element of the current printed element; otherwise, it is the upper contact element of the current printed element.

The computing device 600 can number multiple printed elements. For example, the K-th printed element in the J-th print path of the I-th layer can be numbered as printed element (I, J, K). For printed element (I, J, K), the specific implementation process by which the computing device 200 determines its contact element can be as follows:
The computing device 200 determines that printed element (I, J, K) is the first printed element of Road (I, J), and when Road (I, J-1) is of the print type, the last printed element in Road (I, J-1) is taken as the front contact element of printed element (I, J, K).

The computing device 200 determines that printed element (I, J, K) is the last printed element of Road (I, J), and when Road (I, J+1) is of the print type, printed element (I, J+1, 0) is taken as its corresponding rear contact element.

The computing device 200 determines that printed element (I, J, K) is neither the first printed element nor the last printed element of Road (I, J), and takes printed element (I, J, K-1) as its corresponding front contact element.

The computing device 200 determines that printed element (I, J, K) is not the last printed element of Road (I, J), and takes printed element (I, J, K+1) as its corresponding rear contact element.

After the computing device 200 determines the front contact element and rear contact element of printed element (I, J, K), other printed elements located in the I-th layer and in contact with printed element (I, J, K) can be taken as its corresponding left contact element or right contact element.

The computing device 200 determines that printed elements located in the (I+1)-th layer or the (I-1)-th layer and in contact with printed element (I, J, K) are its corresponding upper contact element or lower contact element.

It should be understood that, in the above embodiments, for ease of description, printed element (I, J+1, 0) is used as the number of the first printed element in the J-th print path of the I-th layer. In actual application, the number of the first printed element in the J-th print path of the I-th layer can be determined according to requirements. For example, printed element (I, J+1, 1) can be used as the number of the first printed element in the J-th print path of the I-th layer. This specification does not impose any limitation in this regard.

By comparing the above formula (6) and (7), it can be seen that the computational load of the first temperature prediction method is smaller than that of the second temperature prediction method. Therefore, in this specification, by classifying the element states based on the positional relationships between printed elements, and then using the temperature prediction method corresponding to different categories of element states for temperature prediction, the computational load in the temperature prediction process can be reduced, thereby improving the efficiency of temperature prediction while ensuring the accuracy of temperature prediction.

With continued reference to FIGS 3 and 4, step S140 can further include:

S144: The computing device 200 determines the temperature prediction data corresponding to a current printing element in the current printing time window.

When a printing element is extruded by the print head in the current printing time window (i.e., the current printed element), its corresponding element state is the third state. The element state can also include the third state. The third state can be referred to as the alive state, indicating that the printing element is activated or begins printing at this time. The third state can correspond to the third temperature prediction method. The third temperature prediction method can be determined based on the nozzle temperature, and it can be expressed by the following formula (8):

$$T_i^n = kT_{nozzle} \qquad (8)$$

$T_i^n$ is the temperature of the current printed element at time $t^n$; $t^n$ is the end time of the current printing time window; $T_{nozzle}$ is the temperature of the print nozzle, which can be obtained from the G-code file; k is the extrusion temperature correction factor, which can be obtained from Table 1.

That is, S144 can include: the computing device 200 determines that when a printing element is extruded in the current printing time window, its corresponding element state is the third state, and performing temperature prediction for the printing element using the third temperature prediction method corresponding to the third state.

With continued reference to FIGS. 3 and 4, step S140 can further include:

S146: The computing device 200 determines the temperature prediction data corresponding to an unprinted element in the current printing time window.

When a printing element has not been extruded by the print head in the current printing time window and before the current printing time window (i.e., the unprinted state), its corresponding element state can be the fourth state. The fourth state can be referred to as the dead state, indicating that the printing element is not activated or not printed at this time. The fourth state can correspond to the fourth temperature prediction method. The fourth temperature prediction method can be determined based on the temperature of the unprinted element in the previous print time window, and it can be expressed by the following formula (9):

$$T_i^n = T_i^{n-1} \qquad (9)$$

In formula (9), $T_i^n$ is the temperature of the current printing element at time $t^n$; $t^n$ is the end time of the current printing time window; $T_i^{n-1}$ is the temperature of the current printing element at time $t^{n-1}$, and $t^{n-1}$ is the start time of the current printing time window.

That is, S146 can include: the computing device 200 determines that when the printing element has not been extruded in the current printing time window and before the current printing time window (i.e., the unprinted state), its corresponding element state is the fourth state, and performs temperature prediction for the printing element using the fourth temperature prediction method corresponding to the fourth state.

The above process describes the temperature prediction process for multiple printing elements within the current printing time window $[t^{n-1}, t^n]$. After the computing device 200 completes the temperature prediction process for the current printing time window, it can predict the temperature data for the next print time window based on $\Delta t$ and the current printing time window by updating the computation time. For example, the current printing time window can be updated to $[t^n, t^{n+1}]$, where $t^{n+1} = t^n + \Delta t$. By repeating this cycle, the sequence $[t^0, t^1, t^2, t^3, ... t^{N+1}]$ and their corresponding temperature prediction data $[T^0_i, T^1_i, T^2_i, ... T^{N+1}_i]$ can be obtained, where N is the total number of print time windows.

With continued reference to FIG. 2, after step S140, the method P100 can further include step S160.

S160: The computing device 200 outputs the temperature prediction data corresponding to multiple printing elements in the current printing time window.

For each current printing time window, the computing device 200 predicts the temperatures of multiple printing elements and outputs the temperature prediction data corresponding to the multiple printing elements in the current printing time window.

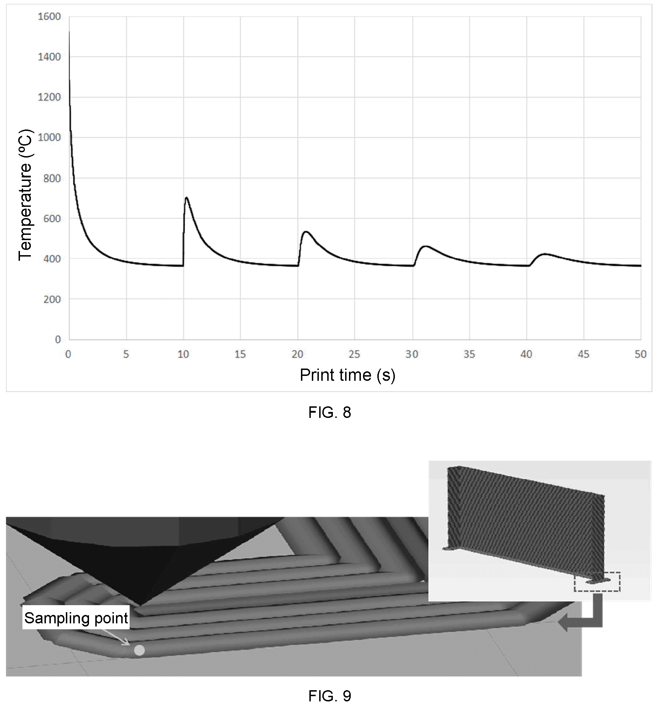

The computing device 200 can output the temperature prediction data in various ways. For example, computing device 200 can visually display the temperature prediction data. There are multiple ways to visually display the temperature data. For instance, computing device 200 can generate a temperature prediction curve based on the temperature prediction data of each printing element in at least one print time window, and the generated temperature prediction curve can be as shown in FIG. 8. Alternatively, computing device 200 can generate charts such as a temperature prediction histogram or a temperature prediction line chart based on the temperature prediction data of each printing element in at least one print time window, and display the above charts through a display device.

The following illustrates the beneficial effects of the 3D printing temperature prediction method and system provided in this specification using experimental data:

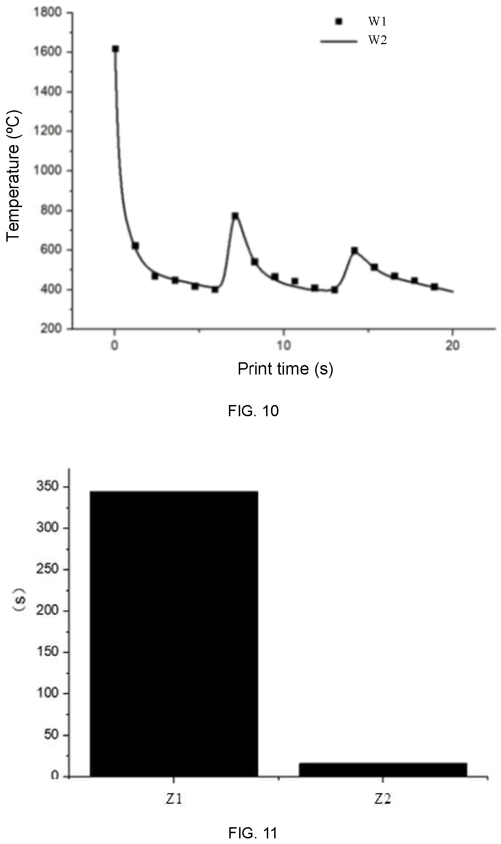

FIG. 9 is a schematic diagram of a line-arc additive manufacturing wall structure and temperature prediction sampling points provided according to some embodiments of this specification; FIG. 10 is a schematic diagram comparing the temperature prediction data obtained by the 3D printing temperature prediction method according to some embodiments of this specification with the temperature prediction data obtained using the alive-dead element technique. In FIG. 10, the solid line W2 represents the temperature prediction data obtained by the 3D printing temperature prediction method, and the discrete points W1 represent the temperature prediction data obtained using the alive-dead element technique. As shown in FIGS. 9 and 10, it can be seen that the two sets of data match well, demonstrating the effectiveness of the 3D printing temperature prediction method of this specification and achieving the same or similar accuracy as the alive-dead element technique.

FIG. 11 is a schematic diagram comparing the computation time of the 3D printing temperature prediction method provided in this specification with the computation time obtained using the alive-dead element technique. As shown in FIG. 11, Z1 represents the computation time when using the alive-dead element technique, and Z2 represents the computation time when using the 3D printing temperature prediction method, with the vertical axis representing computation time. It can be seen that the computation time of the 3D printing temperature prediction method of this specification is much smaller than that of the alive-dead element technique, reaching about 1/20 of the computation time of the alive-dead element technique, demonstrating that using the 3D printing temperature prediction method of this specification can improve the computational efficiency of temperature prediction in the additive manufacturing process.

It should be noted that all the steps in the above embodiments are performed on the basis that the print path is of the print type. When the print path is of the empty-line type, layer-change type, extrusion type, or other types, temperature prediction is not performed.

In summary, the 3D printing temperature prediction method P100 and system 001 provided in this specification, after obtaining multiple printing elements of a three-dimensional model, determine the print state of the multiple printing elements as printed element, current printing element, or unprinted element. For the printed elements among the multiple printing elements, based on the positional relationship between each printed element and the current printing element, the element state corresponding to the printed element is determined, and based on the element state of the printed element and its corresponding temperature prediction method, the temperature of the printed element in the current printing time window is predicted. Finally, the temperature prediction data corresponding to each printed element in the current time window is output. In this solution, the positional relationship between the printed element and the current printing element can indicate whether the current printed element is within the heat-affected zone of the current printing element, and whether the current printing element is affected by heat transfer from the current printed element. Different positional relationships correspond to different element states, and different element states correspond to different temperature prediction methods. Since the computational loads of different temperature prediction methods vary, this approach can improve the computational efficiency of temperature prediction while ensuring the accuracy of the temperature prediction.

Another aspect of this specification provides a non-transitory storage medium storing at least one set of executable instructions for performing 3D printing temperature prediction. When the executable instructions are executed by a processor, the instructions guide the processor to implement the steps of the 3D printing temperature prediction method P100 described in this specification. In some embodiments, various aspects of this specification can also be implemented in the form of a program product, which includes program code. When the program product runs on computing device 200, the program code causes computing device 200 to perform the steps of the 3D printing temperature prediction method P100 described in this specification. The program product for implementing the above method can be embodied in a portable compact disc read-only memory (CD-ROM) including program code and can run on computing device 200. However, the program product of this specification is not limited thereto. In this specification, a readable storage medium can be any tangible medium that contains or stores a program that can be used by, or in conjunction with, an instruction execution system. The program product can employ any combination of one or more readable media. A readable medium can be a readable signal medium or a readable storage medium. Examples of readable storage media include, but are not limited to, electrical, magnetic, optical, electromagnetic, infrared, or semiconductor systems, apparatuses, or devices, or any suitable combination of the foregoing. More specific examples of readable storage media include: electrical connections having one or more wires, portable disks, hard disks, random access memory (RAM), read-only memory (ROM), erasable programmable read-only memory (EPROM or flash memory), optical fiber, portable compact disc read-only memory (CD-ROM), optical storage devices, magnetic storage devices, or any suitable combination of the foregoing. The computer-readable storage medium can include a data signal propagated in a baseband or as part of a carrier, which carries readable program code. Such propagated data signals can take various forms, including but not limited to electromagnetic signals, optical signals, or any suitable combination of the foregoing. A readable medium can also be any readable medium other than a storage medium, capable of transmitting, propagating, or conveying a program for use by, or in combination with, an instruction execution system, apparatus, or device. Program code stored on the readable storage medium can be transmitted by any suitable medium, including but not limited to wireless, wired, optical cable, RF, or any suitable combination of the foregoing. The program code for performing the operations of this specification can be written in any combination of one or more programming languages. The programming languages include object-oriented programming languages, such as Java, C++, etc., and conventional procedural programming languages, such as "C" or similar procedural programming languages. The program code can be executed entirely on the computing device 200, partially on the computing device 200, as a stand-alone software package, partially on computing device 200 and partially on a remote computing device, or entirely on a remote computing device.

The foregoing describes specific embodiments of this specification. Other embodiments are within the scope of the appended claims. In some cases, the actions or steps recited in the claims can be performed in an order different from that described in the embodiments and still achieve the desired results. Additionally, the processes depicted in the accompanying drawings do not necessarily require a particular order or sequential order to achieve the desired results. In certain embodiments, multitasking and parallel processing are also possible or may be advantageous.

In summary, after reading the detailed disclosure, a person skilled in the art will understand that the foregoing detailed disclosure is presented merely by way of example and is not restrictive. Although not explicitly stated herein, a person skilled in the art can understand that this specification encompasses various reasonable changes, improvements, and modifications to the embodiments. These changes, improvements, and modifications are intended to be suggested by this specification and are within the spirit and scope of the exemplary embodiments of this specification.

Additionally, certain terms in this specification have been used to describe embodiments of this specification. For example, "an embodiment," "embodiment," and/or "some embodiments" mean that a particular feature, structure, or characteristic described in connection with that embodiment can be included in at least one embodiment of this specification. It should therefore be emphasized and understood that two or more references to "an embodiment," "embodiment," or "alternative embodiment" in various portions of this specification do not necessarily refer to the same embodiment. Moreover, particular features, structures, or characteristics can be appropriately combined in one or more embodiments of this specification.

It should be understood that in the foregoing description of the embodiments of this specification, various features have been combined in a single embodiment, figure, or description for the purpose of simplifying this specification and aiding understanding of a feature. However, this does not imply that these feature combinations are mandatory. A person skilled in the art, upon reading this specification, can fully recognize that some of the devices or features can be considered and understood as separate, individual embodiments. In other words, the embodiments in this specification can also be understood as an integration of multiple sub-embodiments. Each sub-embodiment remains valid even when it includes fewer features than the full set of features disclosed in a single aforementioned embodiment.

Each patent, patent application, publication of a patent application, and other materials, such as articles, books, specifications, publications, documents, articles, etc., cited herein, except for any historical prosecution documents to which it relates, which may be inconsistent with or any identities that conflict, or any identities that may have a restrictive effect on the broadest scope of the claims, are hereby incorporated by reference for all purposes now or hereafter associated with this document. Furthermore, in the event of any inconsistency or conflict between the description, definition, and/or use of a term associated with any contained material, the term used in this document shall prevail.

Finally, it should be understood that the disclosed embodiments of the application are intended to illustrate the principles of the embodiments of this specification. Other modified embodiments are also within the scope of this specification. Therefore, the embodiments disclosed in this specification are provided merely as examples and not as limitations. A person skilled in the art can adopt alternative configurations based on the embodiments in this specification to implement the application. Accordingly, the embodiments of this specification are not limited to the exact embodiments explicitly described in the application.

**Claims**

1.  A 3D printing temperature prediction method, **characterized in that**, the method comprises: for each printing time window of at least one printing time window:

    determining printing states of a plurality of printing elements of a three-dimensional model, the printing states being categorized into a state of printed element, a state of current printing element, and a state of unprinted element; and
    determining temperature prediction data corresponding to a current printing time window for each printing element among the plurality of printing elements, comprising:

    for each printed element among the printed elements, determining an element state at least based on a positional relationship between the printed element and the current printing element,
    determining the temperature prediction data corresponding to the current printing time window for each printed element based on a temperature prediction method corresponding to the element state, and
    outputting the temperature prediction data corresponding to the current printing time window for each printing element.

2.  The method according to claim 1, **characterized in that** the element state comprises a first state and a second state, the temperature prediction method comprises a first temperature prediction method corresponding to the first state and a second temperature prediction method corresponding to the second state, and a computational cost of the first temperature prediction method is lower than a computational cost of the second temperature prediction method.

3.  The method according to claim 2, **characterized in that** the determining of the element state at least based on the positional relationship between the printed element and the current printing element comprises:

    determining a positional relationship between a current printed element and a heat-affected zone of the current printing element, the heat-affected zone characterizing a region range affected by heat transfer, the positional relationship between the current printed element and the heat-affected zone of the current printing element comprising that the current printed element is within the heat-affected zone of the current printing element and that the current printed element is outside the heat-affected zone of the current printing element; and
    determining, at least based on the positional relationship, an element state corresponding to the current printed element.

4.  The method according to claim 3, **characterized in that** the determining, at least based on the positional relationship, the element state corresponding to the current printed element comprises:

    determining the element state corresponding to the current printed element based on the positional relationship between the current printed element and the heat-affected zone of the current printing element; or
    determining the element state corresponding to the current printed element based on the positional relationship between the current printed element and the heat-affected zone of the current printing element and a temperature parameter of the current printed element.

5.  The method according to claim 4, **characterized in that** the determining of the positional relationship between the current printed element and the heat-affected zone of the current printing element comprises:

    determining position coordinates of the current printed element and position coordinates of the current printing element;
    determining, based on the position coordinates of the current printed element and the position coordinates of the current printing element, a spacing distance between the current printed element and the current printing element; and

when the spacing distance is smaller than a first preset distance threshold, determining that the current printed element is located within the heat-affected zone of the current printing element, or when the spacing distance is greater than the first preset distance threshold, determining that the current printed element is located outside the heat-affected zone of the current printing element.

6. The method according to claim 4, **characterized in that** the determining of the element state corresponding to the current printed element based on the positional relationship between the current printed element and the heat-affected zone of the current printing element comprises:
determining that the current printed element is located within the heat-affected zone of the current printing element, and determining that the element state of the current printed element is the second state.

7. The method according to claim 4, **characterized in that** the determining of the element state corresponding to the current printed element based on the positional relationship between the current printed element and the heat-affected zone of the current printing element and the temperature parameter of the current printed element comprises:
determining that the current printed element is located outside the heat-affected zone of the current printing element, and determining the element state of the current printed element based on a cooling rate of the current printed element.

8. The method according to claim 7, **characterized in that** the determining of the element state of the current printed element based on the cooling rate of the current printed element comprises:
determining that the cooling rate of the current printed element is smaller than a preset cooling rate threshold, and determining that the element state of the current printed element is the first state.

9. The method according to claim 7, **characterized in that** the determining of the element state of the current printed element based on the cooling rate of the current printed element comprises:
determining that the cooling rate of the current printed element is greater than a preset cooling rate threshold, and determining that the element state of the current printed element is the same as an element state of a previous printing time window.

10. The method according to claim 2, **characterized in that** the first temperature prediction method is determined based on a temperature of the current printed element in a previous printing time window, an ambient temperature, and a length of each printing time window.

11. A computing device for temperature prediction in 3D printing, **characterized in that** the computing device comprises:

at least one storage medium, storing at least one set of instructions for performing temperature prediction processing for 3D printing; and
at least one processor, in communication with the at least one storage medium, wherein
when the computing device is operating, the at least one processor reads the at least one set of instructions and executes the method of any one of claims 1 to 10 according to instructions of the at least one set of instructions.

200

| 220 | 260 | 250 |
|---|---|---|
| Processor | I/O components | Communication port |

210

| Disk | ROM | RAM |
|---|---|---|
| 232 | 234 | 236 |

230

FIG. 1

**P100**

A computing device 200 determines printing states of multiple printing elements of a three-dimensional model — 120

The computing device 200 determines temperature prediction data corresponding to each printing element among the multiple printing elements in a current printing time window — 140

The computing device 200 outputs the temperature prediction data corresponding to multiple printing elements in the current printing time window — 160

FIG. 2

The computing device 200 determines the temperature prediction data corresponding to an unprinted element in the current printing time window — S146

The computing device 200 determines the temperature prediction data corresponding to a current printing element in the current printing time window — S144

The computing device 200 determines the temperature prediction data corresponding to a printed element in the current printing time window — S142

The computing device 200 obtains a heat-affected zone of the current printing element and determines a positional relationship between the current printed element and the heat-affected zone of the current printing — S142-22

The computing device 200 determines, at least based on the positional relationship, an element state corresponding to the current printed element — S142-24

For each printed element among printed elements, the computing device 200 determines its corresponding element state at least based on its positional relationship with the current printing element — S142-2

The computing device 200 determines temperature prediction data corresponding to the current printing time window for each printed element based on a temperature prediction method corresponding to the element state of the printed element — S142-4

FIG. 3

20

S140

S146

| 4th temperature prediction method | 4th state |

S144

| 3rd temperature prediction method | 3rd state |

S120

Is the printing element extruded within the current printing time window

Y → Current printing element

N

Is the printing element extruded before the current printing time window

N → Unprinted element

Y

Current printed element(s)

Determine a spacing distance between the current printed element(s) and the current printing element — S142-222

FIG. 4A

S142

S142-2

S142-22

Determine a spacing distance
between the current printed
element(s) and the current
printing element

S142-222

Is the spacing distance
smaller than a first preset
distance threshold

N

Y

S142-224

Within the heat-
affected zone

S142-24

S142-242

2nd state

2nd temperature
prediction
method

S142-4

S142-226

Beyond the heat-
affected zone

Is the cooling rate
smaller than a preset
cooling rate threshold

Y

N

S142-244

1st state

1st temperature
prediction
method

S142-246

element state of the
previous printing
time window

Temperature
prediction
method
corresponding to
the element state

FIG. 4B

FIG. 5A

FIG. 5B

FIG. 5C

FIG.6

FIG. 7

FIG. 8

FIG. 9

FIG. 10

FIG. 11

## INTERNATIONAL SEARCH REPORT

| International application No. |
|---|
| **PCT/CN2023/111373** |

| A. | CLASSIFICATION OF SUBJECT MATTER |
|---|---|

B29C64/386(2017.01)i; B33Y50/00(2015.01)i; B29C64/393(2017.01)n; B33Y50/02(2015.01)n

According to International Patent Classification (IPC) or to both national classification and IPC

| B. | FIELDS SEARCHED |
|---|---|

Minimum documentation searched (classification system followed by classification symbols)

B29C64/-; B33Y/-

Documentation searched other than minimum documentation to the extent that such documents are included in the fields searched

Electronic data base consulted during the international search (name of data base and, where practicable, search terms used)

CNTXT, ENTXTC, WPABSC, VEN: 传导, 对流, 辐射, 扩散, 热, 温度, 时长, 时间, 影响, 预报, 预测, 估测, 预计, 评估, 预判, 推测, 推断, 坐标, 区域, 间隔, 距离, 块, 位置; distance, duration, place, position, situation, temperature, locat???, spac+, temp., predetermin+, estimat+, iterat+, coordinat+, interval?, predict+, tim???, forecast+, rang+, evaluat+.

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113597351 A (ADDUP et al.) 02 November 2021 (2021-11-02) description, paragraphs 330-359 and 365-367 | 1, 11 |
| E | CN 116755644 A (SHANGHAI HANGHE INTELLIGENT TECHNOLOGY CO., LTD.) 15 September 2023 (2023-09-15) claims 1-10 | 1-11 |
| A | CN 112427655 A (HUAZHONG UNIVERSITY OF SCIENCE AND TECHNOLOGY) 02 March 2021 (2021-03-02) claims 1-3 | 1-11 |
| A | CN 109571942 A (HUNAN FARSOON HIGH-TECH CO., LTD.) 05 April 2019 (2019-04-05) entire document | 1-11 |
| A | GB 2606141 A (STRATASYS POWDER PRODUCTION LTD. et al.) 02 November 2022 (2022-11-02) entire document | 1-11 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 October 2023** | **06 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/111373** |

### C.    DOCUMENTS CONSIDERED TO BE RELEVANT

| Category* | Citation of document, with indication, where appropriate, of the relevant passages | Relevant to claim No. |
| --- | --- | --- |
| A | WO 2022089218 A1 (SUZHOU HELIO ADDITIVE INFORMATION TECHNOLOGY CO., LTD.) 05 May 2022 (2022-05-05)<br>entire document | 1-11 |

Form PCT/ISA/210 (second sheet) (July 2022)

**INTERNATIONAL SEARCH REPORT**
**Information on patent family members**

International application No.

**PCT/CN2023/111373**

| Patent document cited in search report | | | Publication date (day/month/year) | Patent family member(s) | | | Publication date (day/month/year) |
|---|---|---|---|---|---|---|---|
| CN | 113597351 | A | 02 November 2021 | US | 2022097140 | A1 | 31 March 2022 |
| | | | | EP | 3917704 | A1 | 08 December 2021 |
| | | | | FR | 3092020 | A1 | 31 July 2020 |
| | | | | FR | 3092020 | B1 | 08 January 2021 |
| | | | | KR | 20210144673 | A | 30 November 2021 |
| | | | | WO | 2020157427 | A1 | 06 August 2020 |
| | | | | JP | 2022523494 | W | 25 April 2022 |
| CN | 116755644 | A | 15 September 2023 | None | | | |
| CN | 112427655 | A | 02 March 2021 | CN | 112427655 | B | 03 December 2021 |
| CN | 109571942 | A | 05 April 2019 | CN | 109571942 | B | 05 November 2021 |
| GB | 2606141 | A | 02 November 2022 | GB | 202105752 | D0 | 09 June 2021 |
| | | | | US | 2022339881 | A1 | 27 October 2022 |
| | | | | EP | 4079492 | A1 | 26 October 2022 |
| WO | 2022089218 | A1 | 05 May 2022 | None | | | |

Form PCT/ISA/210 (patent family annex) (July 2022)